# EUROPÄISCHE PATENTSCHRIFT

(11) **EP 3 455 008 B1**
(45) Veröffentlichungstag und Bekanntmachung des Hinweises auf die Patenterteilung: **13.07.2022**
(21) Anmeldenummer: 17723376.4
(22) Anmeldetag: 12.05.2017
(51) Int. Cl.: B21J 15/28, B21J 15/32, B23P 19/00, B25J 9/16, B65G 47/14

(54) **VERFAHREN UND STATION ZUM BEFÜLLEN EINER NIETKASSETTE MIT NIETELEMENTEN**
METHOD AND STATION FOR FILLING A RIVET CARTRIDGE WITH RIVET ELEMENTS
PROCÉDÉ ET STATION POUR REMPLIR UNE CASSETTE À RIVETS D'ÉLÉMENTS FORMANT RIVETS

(30) Priorität: 13.05.2016 DE 102016108874
(43) Veröffentlichungstag der Anmeldung: 20.03.2019
(73) Patentinhaber: Broetje-Automation GmbH, 26180 Rastede (DE)
(72) Erfinder: EUSTERWIEMANN, Christoph, 26121 Oldenburg (DE)
(74) Vertreter: Gottschald Patentanwälte Partnerschaft mbB
(86) Internationale Anmeldenummer: PCT/EP2017/061513
(87) Internationale Veröffentlichungsnummer: WO 2017/194760

(56) Entgegenhaltungen:
- EP-A1- 2 253 415
- DE-A1-102009 040 764
- DE-A1-102012 020 981
- DE-A1-102014 106 312
- JP-A- S60 123 231

## Beschreibung

Die Erfindung betrifft ein Verfahren zum Befüllen einer Nietkassette mit Nietelementen gemäß Anspruch 1, ein Verfahren zur Herstellung eines Strukturbauteils gemäß Anspruch 14 sowie eine Nietbeladestation gemäß Anspruch 15.

Aus dem Stand der Technik ist es bekannt, dass Nietelemente zum Befüllen einer Nietkassette von einer als Vibrationswendelförderer ausgebildeten Nietbereitstellungseinheit vereinzelt, ihre Ausrichtung geprüft und die Nietelemente dann einer Nietkassette zugeführt werden. Diese Nietbeladestationen müssen, wenn andersartige Nietelemente einer Nietkassette zugeführt werden sollen, manuell auf die jeweils zu händelnden Nietelemente und deren Geometrie eingestellt werden. Diese manuellen Einstellungen bedingen einen nicht unerheblichen Rüstaufwand.

Aus der DE 10 2012 020 981 A1 ist es bekannt, Kleinteile zu vereinzeln und mit einem Roboter einem Magazin zuzuführen. In der EP 2 253 415 A1 ist das Zuführen von Muttern zu einem Rack mittels eines Roboters beschrieben.

Der vorliegenden Erfindung liegt somit die Aufgabe zugrunde, ein einfaches und flexibles Befüllen von Nietkassetten mit Nietelementen zu ermöglichen.

Gelöst wird die Aufgabe bei einem Verfahren durch die Merkmale von Anspruch 1.

Dadurch, dass die Nietelemente aus der Nietbereitstellungseinheit einer in der Nietkassettenaufnahme aufgenommenen Nietkassette zugeführt und darin ausgerichtet aufgenommen werden und dabei zumindest ein Teil der Transports von der Nietbereitstellungseinheit zur Nietkassette roboterbasiert erfolgt, ist ein äußerst flexibles Handling unterschiedlichster Nietelemente möglich. Es müssen vorzugsweise keine mechanischen Einstellungen an der Nietbereitstellungseinheit vorgenommen werden, um diese auf eine bestimmte Nietelementgattung und/oder bestimmte Geometrien der Nietelemente einzustellen. Die Nietelemente können einfach von einem oder ggf. mehreren Roboter aus der Nietbereitstellungseinheit entnommen und der Nietkassette zugeführt werden. Auch Nietele mente unterschiedlichsten Durchmessers oder unterschiedlichster Länge können von einem Greifer einfach gepackt und der Nietkassette zugeführt werden.

In den Ansprüchen 2 bis 4 sind bevorzugte Fortbildungen des Verfahrens beschrieben, welche die Flexibilität des Verfahrens zum Befüllen von Nietkassetten mit unterschiedlichsten Nietelementen zeigen.

Gemäß Anspruch 5 werden die Nietelemente in der Nietbereitstellungseinheit vereinzelt und vorzugsweise einem Abgreifbereich zugeführt. Dies ermöglicht ein besonders einfaches Aufnehmen der Nietelemente durch den Roboter.

In den Ansprüchen 6 bis 11 sind bevorzugt die Steuerung bzw. das Prüfen der Nietelemente betreffende Verfahrensschritte beschrieben.

Die Ansprüche 12 und 13 beschreiben eine bevorzugte Ausgestaltung der Übergabe des Nietelements vom Roboter an die Nietkassette.

Die eingangs beschriebene Aufgabe wird bei einem Verfahren zur Herstellung eines Strukturbauteils durch die Merkmale von Anspruch 14 gelöst. Es ergeben sich dieselben Vorteile wie zuvor im Zusammenhang mit dem Verfahren zum Befüllen einer Nietkassette beschrieben.

Schließlich wird die eingangs beschriebene Aufgabe auch durch eine Nietbeladestation gemäß Anspruch 15 gelöst. Es ergeben sich dieselben Vorteile wie vorstehend in Verbindung mit den Verfahren beschrieben. Die in Verbindung mit dem Verfahren beschriebenen Merkmale gelten für die Nietbeladestation entsprechend.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer vorschlagsgemäßen Nietbeladestation zur Durchführung eines vorschlagsgemäßen Verfahrens a) in einer Seitenansicht, b) in einer Aufsicht,
- Fig. 2: schematisch eine Fertigungseinrichtung mit einer Nietspeichereinheit und einem Bohr-Niet-Werkzeug und
- Fig. 3: beispielhaft von einem Greifer gegriffene Nietelemente.

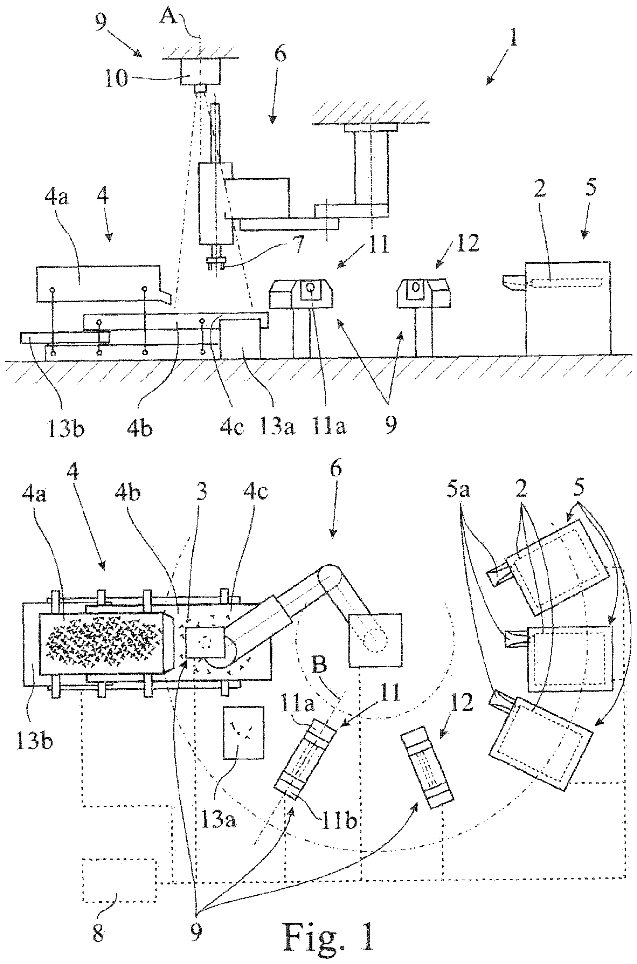

In der Fig. 1 ist eine vorschlagsgemäße Nietbeladestation 1 zum Befüllen einer Nietkassette 2 mit Nietelementen 3 gezeigt. Die Nietbeladestation 1 weist eine Nietbereitstellungseinheit 4 zur Bereitstellung von Nietelementen 3 und eine Nietkassettenaufnahme 5 zum Aufnehmen einer Nietkassette 2 auf. Die Nietelemente 3 werden aus der Nietbereitstellungseinheit 4 einer in der Nietkassettenaufnahme 5 aufgenommenen Nietkassette 2 zugeführt und darin ausgerichtet, insbesondere lagegesichert, aufgenommen. Hier erfolgt zumindest ein Teil des Transports von der Nietbereitstellungseinheit 4 zur Nietkassette 2 roboterbasiert.

Gemäß eines bevorzugten Ausführungsbeispiels erfolgt mindestens 50%, vorzugsweise mindestens 80%, weiter vorzugsweise mindestens 95% des Transports, insbesondere des Transportweges, der Nietelemente 3 von der Nietbereitstellungseinheit 4 zur Nietkassette 2 roboterbasiert.

Der roboterbasierte Transport erfolgt mittels eines Roboters 6. Bei dem Roboter 6 handelt es sich hier und vorzugsweise um einen Roboter 6 mit mindestens zwei Rotationsachsen. Der Roboter 6 kann jedoch auch mindestens drei oder vier oder mehr Rotationsachsen aufweisen. Besonders bevorzugt ist der Roboter 6 ein Skara-Roboter oder ein Industrieroboter.

Dadurch, dass ein Roboter 6 die Nietelemente 3 hier und vorzugsweise aus der Nietbereitstellungseinheit 4 entnimmt und der Nietkassette 2 zuführt, kann die Nietbeladestation 1 viele verschiedene Nietelemente 3 auf einfache Art und Weise handhaben und verschiedenen Nietkassetten 2 zuführen.

Bei den Nietelementen 3 kann es sich beispielsweise um Niete 3a und/oder Nietkollare 3b und/oder Spacer handeln. Insbesondere kann die Nietbeladestation 1 mehrere Nietkassettenaufnahmen 5 zur Aufnahme von Nietkassetten 2 aufweisen.

Die Nietelemente 3 werden hier und vorzugsweise in Abhängigkeit von einer Prüfung, insbesondere durch eine Prüfeinheit 11, welche später näher beschrieben werden soll, in unterschiedliche Nietkassetten 2 aufgenommen.

Vorzugsweise können mit der Nietbeladestation 1 Nieten unterschiedlicher Gattung, insbesondere unterschiedlichen Typs, und/oder unterschiedlicher Nennlänge und/oder unterschiedlichen Nenndurchmessers durch die Nietbeladestation 1 ohne Veränderung der mechanischen Konfiguration der Nietbeladestation 1 einer Nietkassette 2 bzw. verschiedenen Nietkassetten 2 zugeführt werden.

Zusätzlich oder alternativ können Nietkollare unterschiedlicher Gattung, insbesondere unterschiedlichen Typs, und/oder unterschiedlicher Nennlänge und/oder unterschiedlichen Nenndurchmessers durch die Nietbeladestation 1 ohne Veränderung der mechanischen Konfiguration der Nietbeladestation einer Nietkassette 2 bzw. verschiedenen Nietkassetten 2 zugeführt werden.

Es ist vorzugsweise also auch möglich, Nieten und Nietkollare durch die Nietbeladestation 1 ohne Veränderung der mechanischen Konfiguration der Nietladestation 1 einer Nietkassette 2 bzw. verschiedenen Nietkassetten 2 zuzuführen.

Das gleiche gilt hier und vorzugsweise auch für Spacer. Auch Spacer unterschiedlicher Gattung, insbesondere unterschiedlichen Typs, und/oder unterschiedlicher Nennlänge und/oder unterschiedlichen Nenndurchmessers können durch die Nietbeladestation 1 ohne Veränderung der mechanischen Konfiguration der Nietbeladestation 1 einer Nietkassette 2 bzw. verschiedenen Nietkassetten 2 zugeführt werden.

Erreicht wird dies durch den Einsatz des Roboters 6. Dieser kann mit seinem Greifer 7, insbesondere einem Zweifinger-Greifer, die Nietelemente 3 verschiedenster Ausgestaltung greifen und sicher und ausgerichtet, insbesondere lagedefiniert, den Nietkassetten 2 zuführen. Insbesondere können alle einer Nietkassette zugeführten Nietelemente 3 vom Roboter 6 aufgenommen, ausgerichtet und der Nietkassette 2 zugeführt werden. Es können also vorzugsweise alle Nietelemente 3 auf dem Transportweg von der Nietbereitstellungseinheit 4 zur Nietkassette ausgerichtet werden. Ihre Ausrichtung muss nicht vor der Aufnahme in die Nietkassette 2 geprüft werden und im Falle einer Falschausrichtung müssen diese somit auch nicht gedreht oder erneut der Nietbereitstellungseinheit 4 zugeführt werden.

Ferner ist eine Steuerung 8 zur Steuerung der Nietbeladestation 1 vorgesehen.

Dabei kann die Steuerung 8 zentral oder dezentral ausgebildet sein, also entweder eine zentrale Steuerungseinheit aufweisen oder mehrere dezentrale Steuerungseinheiten aufweisen. Die Steuerung 8 steuert hier und vorzugsweise die Nietbereitstellungseinheit 4 und den Roboter 6.

Zur Bereitstellung der Nietelemente 3 ist die Nietbereitstellungseinheit 4 vorzugsweise als Vereinzelungseinheit ausgebildet. Der Nietbereitstellungseinheit 4 werden die Nietelemente 3 gemäß einer bevorzugten Ausgestaltung des Verfahrens aus einer Umverpackung zugeführt. Von der Steuerung 8 können Informationen über die Nietelemente 3, insbesondere mit der Umverpackung verbundene Informationen über die Nietelemente 3, erfasst werden. Hierbei kann es sich beispielsweise um den Typ der Nietelemente 3 und/oder geometrische Sollabmaße und/oder Chargeninformationen handeln. Insofern umfassen die Informationen über die Nietelemente 3 vorzugsweise Spezifikationen der Nietelemente 3. Die Erfassung kann beispielsweise mittels eines Barcode-Scanners und/oder eines RFID-Lesegerätes erfolgen. Darüber hinaus ist jedoch auch eine manuelle Eingabe und/oder Auswahl durch einen Bediener möglich.

Auf diese Weise können Sollinformationen, insbesondere Nennmaße der Nietelemente und ggf. chargenspezifische Toleranzbereiche, festgestellt werden, auf welche die Nietelemente 3 geprüft werden können.

Hier und vorzugsweise weist die Nietbereitstellungseinheit 4 einen Bevorratungsbereich 4a zur Aufnahme und Bevorratung von Nietelementen 3 auf. Sodann weist die Nietbereitstellungseinheit 4 vorzugsweise einen Vereinzelungsbereich 4b zur Vereinzelung der Nietelemente 3 und einen Abgreifbereich 4c auf. Hier und vorzugsweise können der Vereinzelungsbereich 4b und der Abgreifbereich 4c fließend ineinander übergehen. Im Abgreifbereich 4c sind hier die Nietelemente 3 chaotisch aber vereinzelt angeordnet.

Im Ausführungsbeispiel schüttet die Nietbereitstellungseinheit 4, insbesondere durch Rüttelbewegungen, zur Bereitstellung von Nietelementen 3 einige Nietelemente 3 aus dem Bevorratungsbereich 4a in den Vereinzelungsbereich 4b, von wo die Nietelemente 3, insbesondere durch Rüttelbewegungen, vereinzelt und dem Abgreifbereich 4c zugeführt werden. Die Nietelemente 3 werden hier und vorzugsweise im Abgreifbereich 4c roboterbasiert, insbesondere durch den Roboter 6, abgegriffen.

Ferner weist die Nietbeladestation 1 eine Sensoranordnung 9, insbesondere mit einem optischen Sensor 10 auf, mittels der bzw. dem die Steuerung 8 die Nietelemente 3 erfasst. Es wird auch die Sensoranordnung 9 und damit ggf. der optische Sensor 10 hier von der Steuerung 8 gesteuert.

Der optische Sensor 10 ist vorzugsweise über der Nietbereitstellungseinheit 4, insbesondere dem Abgreifbereich 4c, angeordnet. Der Erfassungsbereich des optischen Sensors 9 ist vorzugsweise auf den Abgreifbereich 4c gerichtet. Dabei kann der optische Sensor 9 vorzugsweise ortsfest über der Nietbereitstellungseinheit 4 insbesondere dem Abgreifbereich 4c angeordnet sein, er kann jedoch auch am Roboter 6 befestigt sein.

Bevorzugt ist hier eine von Roboterbewegungen unabhängige Befestigung oberhalb der Nietbereitstellungseinheit 4. Dann können parallel zu Arbeitsbewegungen des Roboters 6 die Nietelemente 3 erfasst werden und ihre Position und/oder Ausrichtung bestimmt werden, insbesondere dann, wenn der Roboter 6 aus dem Erfassungsbereich des optischen Sensors 10 herausbewegt ist.

Um die Erfassung der Nietelemente 3 im Abgreifbereich 4c zu verbessern, ist zumindest der Abgreifbereich 4c hier und vorzugsweise von unten beleuchtet. Dazu kann der Abgreifbereich einen lichtdurchlässigen Boden aufweisen. Mittels des optischen Sensors 10 erfasst die Steuerung 8 im Ausführungsbeispiel die Position und/oder Ausrichtung der Nietelemente 3 in der Nietbereitstellungseinheit 4, insbesondere im Abgreifbereich. Zum Greifen der Nietelemente 3 steuert die Steuerung 8 basierend auf der Position und/oder Ausrichtung der Nietelemente 3 den Roboter zur Aufnahme, insbesondere zum Greifen, eines Nietelements 3 an. Unter Ausrichtung ist hier und vorzugsweise die Orientierung der Längsachse des Nietelements 3 und insbesondere seines Kopfes 3c zu verstehen.

Erfindungsgemäß erfasst die Steuerung 8 mittels der Sensoranordnung insbesondere des optischen Sensors 10, die Gattung und den Typ eines von der Nietbereitstellungseinheit 4 bereitgestellten, insbesondere im Abgreifbereich 4c liegenden, Nietelements 3. Der Typ eines Nietelements 3 unterscheidet sich insofern von dessen Gattung, als dass die Gattung die Art des Niets, Nietkollars, und/oder Spacers bestimmt, sich hinsichtlich der Dimensionen seiner Merkmale, insbesondere hinsichtlich seiner Nennmaße, jedoch nicht festlegt. Der Typ eines Nietelements 3 spezifiziert nicht nur die Gattung, sondern auch die Nennmaße des Nietelements 3, also insbesondere den Nenndurchmesser und die Nennlänge. Ferner kontrolliert die Steuerung 8, ob es sich bei dem Typ um einen in eine Nietkassette 2 zu füllenden Solltyp handelt. Auf diese Weise können der Nietkassette 2 bzw. den Nietkassetten 2 nur solche Nietelemente 3 zugeführt werden, welche dem Solltyp entsprechen.

Vorzugsweise werden vorbestimmte, für den Bohrprozess und/oder den Nietprozess relevante Eigenschaften der Nietelemente 3, insbesondere der Nietelemente 3 als solcher, vor der Zuführung zur Nietkassette 2 erfasst. Vorzugsweise sind die vorbestimmten, für den Bohrprozess und/oder den Nietprozess relevante Eigenschaften geometrische Eigenschaften der Nietelemente 3 und die Steuerung 8 misst mittels der Sensoranordnung 9, insbesondere mittels eines der Sensoranordnung 9 zugeordneten optischen Sensors 10 und/oder einer der Sensoranordnung 9 zugeordneten Prüfeinheit 11, diese Eigenschaften. Dies ermöglicht beim späteren Herstellen der Nietverbindung ein abgestimmtes Bohren und/oder Nieten entsprechend der erfassten Eigenschaften des Nietelements 3 und/oder die Auswahl eines Nietelements 3 passend zu einer vorgenommenen Bohrung. Insbesondere Kopfüberstände eines Nietelements 3 über einen vordefinierten Toleranzbereich hinaus können auf diese Weise wirksam vermieden werden.

Die für den Bohrprozess und/oder Nietprozess relevanten Eigenschaften der Nietelemente 3 sind vorzugsweise diejenigen Eigenschaften, aufgrund denen der Bohrprozess und/oder Nietprozess nietelementspezifisch, insbesondere für Nietelemente 3 gleichen Typs, angepasst wird bzw. diejenigen Eigenschaften, aufgrund denen das Nietelement 3 gegenüber einem Nietelement 3 gleichen Typs für eine durchgeführte Bohrung für diese ausgewählt wird.

Hier und vorzugsweise können die für den Bohrprozess und/oder den Nietprozess relevanten Eigenschaften die Nietlänge und/oder der Schaftdurchmesser und/oder die Schaftlänge sein. Diese Größen werden hier und vorzugsweise durch die Sensoranordnung 9, insbesondere den auf den Abgreifbereich gerichteten Sensor 10, erfasst. Zur Erfassung von mittels des optischen Sensor 10 zu erfassenden Eigenschaften der Nietelemente 3, insbesondere der Eigenschaften Nietlänge und/oder Schaftdurchmesser und/oder Schaftlänge führt die Steuerung 8 eine Transformation der optischen Aufnahme durch. Dies ist notwendig, da bspw. die Nietköpfe der Nietelemente 3 hier und vorzugsweise eine leichte Schräglage im Abgreifbereich 4c bewirken. Die Messtoleranz dieser Messung liegt vorzugsweise im Bereich von mindestens 500 mµ weiter vorzugsweise von mindestens 200 mµ, weiter vorzugsweise von mindestens 100 mµ.

Hier und vorzugsweise prüft die Steuerung 8 mittels der Sensoranordnung 9, insbesondere des optischen Sensors 10, die Nietelemente 3 auf eine Beschädigung. Hier kann beispielsweise erkannt werden, ob der Kopf 3c eines Nietelements 3 fehlt. Die Erfassung bzw. Prüfung der Nietelemente 3 mittels des auf den Abgreifbereich 4c gerichteten Sensors 10 erfolgt vorzugsweise vor dem Abgreifen des Nietelemente 3 durch den Roboter 6.

Vorzugsweise weist die Nietbeladestation 1 eine Prüfeinheit 11 zur Erfassung von vorbestimmten, für den Bohrprozess und/oder den Nietprozess relevanten Eigenschaften der Nietelemente 3 auf. Die Prüfeinheit 11 wird hier und vorzugsweise ebenfalls von der Steuerung 8 gesteuert.

Hier und vorzugsweise werden mit der Prüfeinheit 11 als vorbestimmte, für den Bohrprozess und/oder den Nietprozess relevante Eigenschaften ein Nietkopfdurchmesser D_{K} und/oder eine Nietkopflänge L_{K} und/oder ein Winkel eines Nietsenkkopfes W und/oder ein Übergangsradius R gemessen und erfasst. Bei einem Übergangsradius R handelt es sich hier und vorzugsweise um einen Radius zwischen zwei Abschnitten eines Nietelements 3, insbesondere zwischen Kopf 3c und Schaft 3d eines Niets 3a. Zusätzlich kann ggf. auch der Schaftdurchmesser Ds ermittelt werden. Hier und vorzugsweise ist die Messtoleranz der Messung mit der Prüfeinheit 11 deutlich geringer, insbesondere mindestens um den Faktor 10 geringer, als die Messtoleranz bei der Messung mit dem auf die Nietbereitstellungseinheit 4 gerichteten optischen Sensor 10.

Darüber hinaus unterscheiden sich die Messungen mit dem auf die Nietbereitstellungseinheit 4 gerichteten optischen Sensor 10 und mit der Prüfeinheit 11 vorzugsweise dadurch, dass mit dem auf die Nietbereitstellungseinheit 4 gerichteten optischen Sensor 9 mehrere Nietelemente 3 gleichzeitig und, insbesondere vollständig, erfasst werden, während mit der Prüfeinheit 11 vorzugsweise nur ein Ausschnitt eines Nietelements 3 erfasst wird.

Hier und vorzugsweise weist die Prüfeinheit 11 einen optischen Sensor 11a auf. Mit dem optischen Sensor 11a der Prüfeinheit 11 werden vorbestimmte, für den Bohrprozess und/oder den Nietprozess relevante Eigenschaften erfasst. Vorzugsweise erfasst die Steuerung 8 mittels des optischen Sensors 11a diese Eigenschaften.

Die Blickachse A des auf die Nietbereitstellungseinheit 4 gerichteten optischen Sensors 10 der Sensoranordnung 9 und die Blickachse B des optischen Sensors der Prüfeinheit 11a verlaufen hier und vorzugsweise nicht parallel zueinander. Weiter vorzugsweise sind die Blickachse A des auf die Nietbereitstellungseinheit 4 gerichteten optischen Sensors 10 und die Blickachse B des optischen Sensors 11a der Prüfeinheit 11 im Wesentlichen orthogonal zueinander. Auf diese Weise kann eine Prüfung des Nietelements 3 von zwei verschiedenen Seiten erfolgen und es können nur einseitig ausgeprägte Fehler eines Nietelements 3 besser erkannt werden.

Zusätzlich oder alternativ kann die Prüfeinheit 11 eine Beleuchtung 11b zur Messung der vorbestimmten, für den Bohrprozess und/oder den Nietprozess relevanten Eigenschaften aufweisen, welche während der Erfassung das Nietelement 3 beleuchtet. Die Beleuchtung 11b ist hier und vorzugsweise dem Sensor 11a der Prüfeinheit 11 gegenüber angeordnet. Die Beleuchtungsachse und die Blickachse B des optischen Sensors 11a sind dabei vorzugsweise koaxial angeordnet. Die Blickrichtung des Sensors 11 und der Beleuchtung 11b sind hier aufeinander ausgerichtet.

Im Ausführungsbeispiel ist die Prüfeinheit 11 als beidseitig telezentrisches System ausgebildet. Dies ermöglicht eine genaue Messung ohne eine genaue Positionierung des Nietelements 3 zwischen der Beleuchtung 11b und dem optischen Sensor 11a.

Hier und vorzugsweise ist die Messtoleranz mit der Prüfeinheit unter +/-5 µm, vorzugsweise unter +/- 3 µm, weiter vorzugsweise im Wesentlichen bei +/- 2 µm.

Ferner kann eine weitere Prüfung der Nietelemente 3 vorgesehen sein. Diese wird hier und vorzugsweise durch eine weitere Prüfeinheit 12 ausgeführt. Die weitere Prüfeinheit 12 weist vorzugsweise einen optischen und/oder mechanischen Sensor auf. Je nach zu erfassenden Eigenschaft der Nietelemente 3 kann die weitere Prüfeinheit 12 wie die Prüfeinheit 11 ausgebildet sein. Sie kann jedoch auch einen anderen Aufbau aufweisen.

Beispielsweise kann die Prüfeinheit 12 zur Prüfung von Nietelementen 3, insbesondere Nietkollaren 3b und/oder Spacern vorgesehen sein. Auf diese können die Nietelemente 3 zur Prüfung aufgeschoben und/oder in diese können die Nietelemente 3 eingetaucht werden. Eine solche Prüfeinheit 12 hat sich insbesondere zur Prüfung von Schraubkollaren und/oder von Quetschkollaren bewährt. Mit einer solchen Prüfeinheit 12 können, insbesondere mittels einer Strukturerkennung, Schließrillen und/oder Schließgewinde erfasst und geprüft werden.

Hier und vorzugsweise führt eine Prüfeinheit 11, 12 eine Strukturerkennung zur Erkennung und/oder Vermessung von Merkmalen am Schaft 3d des Nietelements 3 durch. Beispielsweise kann die Strukturerkennung Schließrillen 3e und/oder Schließgewinde erfassen und prüfen.

Hier und vorzugsweise transportiert der Roboter 6 die Nietelemente 3, insbesondere einzeln, von der Nietbereitstellungseinheit 4 zu einer Prüfeinheit 11, 12 bzw. den Prüfeinheiten 11, 12. Vorzugsweise hält der Roboter 6 das Nietelement 3 während der Prüfung bzw. der Prüfungen mit der Prüfeinheit 11, 12 bzw. den Prüfeinheiten 11, 12 gegriffen. Die Prüfungen werden hier und vorzugsweise sequentiell durchgeführt. Auch zwischen den Prüfeinheiten 11, 12 wird das Nietelement 3 hier und vorzugsweise vom Roboter 6 transportiert. Ggf. kann es erforderlich sein, dass der Roboter 6 zwischen zwei Prüfeinheiten 11, 12 das Nietelement 3 absetzt und umgreift. Dies ist insbesondere dann sinnvoll, wenn der Greifer 7 des Roboters 6 aufgrund der Größe des Nietelements 3 dieses nur so greifen kann, dass beim Greifen zu messende Größen verdeckt sind.

Nach dem Prüfen in der Prüfeinheit 11, 12 bzw. den Prüfeinheiten 11, 12 wird das Nietelement 3 hier und vorzugsweise der Nietkassette 2 zugeführt.

Besonders bevorzugt ist das Verfahren in der Art ausgebildet, dass alle einer Nietkassette 2 zugeführten Nietelemente 3 auf die vorbestimmten, für den Bohrprozess und/oder den Nietprozess relevanten Eigenschaften geprüft wurden. Vorzugsweise werden jedoch zumindest 50 %, weiter vorzugsweise zumindest 80 %, weiter vorzugsweise mindestens 95 % aller einer Nietkassette zugeführten Nietelemente 3 geprüft. Insofern unterscheidet sich hier und vorzugsweise das Verfahren von einer chargenweisen stichprobenartigen Prüfung von Nietelementen 3 bei einem Niethersteller dadurch, dass eine signifikante Anzahl von Nietelementen 3 von der Nietladestation 1 vor der Zuführung zur Nietkassette 2 auf vorbestimmte, für den Bohr- und/oder Nietprozess relevante Eigenschaften geprüft werden. Vorzugsweise werden von der Steuerung 8 fehlerhafte Nietelemente 3 erfasst und deren Fehler protokoliert. Vorzugsweise werden die fehlerhaften Nietelemente 3 der Umverpackung zugeordnet, welcher sie entnommen wurden. Dies ermöglicht ein umfassendes Reklamationsmanagement von Nietelementen 3 gegenüber dem Hersteller der Nietelemente 3.

Zusätzlich oder alternativ können mehrere Nietkassettenaufnahmen 5 mit Nietkassetten 2 vorgesehen sein, wobei die erfassten bzw. geprüften Nietelemente 3 in Abhängigkeit von den erfassten Eigenschaften eines Nietelements 3 einer Nietkassette 2 zugeführt werden. Vorzugsweise werden mindestens zwei der mehreren Nietkassetten 2 Nietelemente 3 des gleichen Typs zugeführt. Dies ist insbesondere zum Sortieren der Nietelemente 3 wie nachfolgend beschrieben vorteilhaft.

Vorzugsweise werden zum Sortieren der Nietelemente 3 eines Typs Subkategorien gebildet und diesen Subkategorien, insbesondere jeweils, eine Nietkassette 2 zugeordnet. Zusätzlich oder alternativ können auf der Grundlage der Informationen über die Nietelemente 3, insbesondere der Spezifikation der Nietelemente 3, Subkategorien gebildet und diesen Subkategorien, insbesondere jeweils, eine Nietkassette 2 zugeordnet werden. Die Nietelemente 3 können dann in Abhängigkeit von ihrer Prüfung in der Prüfeinheit 11, 12 entsprechend ihrer Einordnung in eine Subkategorie der dieser Subkategorie zugeordneten Nietkassette 2 zugeführt werden.

Vorzugsweise werden die Subkategorien durch Toleranzbereiche gebildet. Auf diese Weise ist eine Chargenunterverteilung von Nietelementen 3 in die Nietkassetten 2 möglich. Die Nietelemente 3 können also in der Weise von der Nietbeladestation 1 sortiert werden, dass die, insbesondere aus einer Umverpackung stammenden, Nietelemente 3 in verschiedene kleinere Toleranzbereiche sortiert werden. Dann befinden sich in den einzelnen Nietkassetten 2 nach dem Sortieren nur Nietelemente 3 mit einer in der Gesamtheit geringeren Toleranzbereichsbreite, als die der Nietbeladestation 1 ursprünglich aus einer Umverpackung zugeführten Nietelementen 3 aufweisen.

In diesem Zusammenhang hat es sich besonders gewährt, wenn Informationen über die einer Nietkassette zugeführten Nietelemente 3 oder einer Nietkassette 2 zuzuführenden Nietelemente 3 verknüpft werden. Vorzugsweise werden die Informationen, insbesondere die Spezifikation und/oder die Subkategorie mit der Nietkassette 2 verknüpft. Dabei kann es sich insbesondere um einen Toleranzbereich handeln. Zusätzlich oder alternativ können jedoch auch Eigenschaften, insbesondere Abmessungen, jedes einzelnen Nietelements und ggf. die Reihenfolge der Nietelemente 3 in der Nietkassette 2 mit der Nietkassette 2 verknüpft werden. Die Verknüpfung kann beispielsweise dadurch geschehen, dass diese Informationen auf einen RFID-Chip der Nietkassette 2 geschrieben werden. Hierdurch wird eine genaue Abstimmung des Bohr- als auch des Nietprozesses auf die für die Nietung vorgesehenen Nietelemente 3 ermöglicht.

Auf Basis dieser Informationen kann später unter verschiedenen Nietelementen 3 eines Typs nach dem Vermessen einer Bohrung ein Nietelement 3 zum Setzen in die Bohrung ausgewählt werden, indem eine Fertigungseinrichtung 14 ein entsprechendes Nietelement 3 anfordert. Zusätzlich oder alternativ kann die mit der Fertigungseinrichtung 14 zu erstellende Bohrung auf der Basis eines zu setzenden Nietelements 3 - insbesondere aufgrund seiner Einordnung in eine Subkategorie - bestimmt oder angepasst werden, beispielsweise die zu bohrende Senktiefe in Abhängigkeit von den Abmessungen des Nietkopfes bestimmt oder angepasst werden. Hierfür werden vorzugsweise die verknüpften Informationen von der Fertigungseinrichtung 14 abgefragt.

Hier und vorzugsweise weisen die Nietkassettenaufnahme 5 und/oder die Nietkassette 2 eine Ablage 5a auf, in die die Nietelemente 2 vom Roboter 6 abgelegt werden. Ggf. kann die Nietkassette 2 die Nietelemente 3 auch direkt vom Roboter 6 übernehmen.

In die Nietkassette 2 werden die Nietelemente 3 hier und vorzugsweise mittels einer Druckdifferenz, also insbesondere mittels eines Unterdrucks und/oder mittels Druckluft in die Nietkassette 2 gefördert. Dabei können die Nietelemente 3 mit dem Schaft 3d oder dem Kopf zuerst in die Nietkassette 2 gefördert werden.

Hier werden die Nietelemente 3 ausgerichtet, insbesondere lagedefiniert, von der Nietkassette 2 aufgenommen. Dies kann beispielsweise durch einen insbesondere gewickelten Schlauch in der Nietkassette 2 erfolgen, in welchem die Nietelemente 3 aufgenommen und von welchem die Nietelemente 3 geführt werden. Besonders bewährt hat es sich, wenn die Zufuhr bzw. Abfuhr der Nietelemente 3 in die Nietkassette 2 bzw. aus der Nietkassette 2 nach dem Prinzip des First In - First Out und/oder nach dem Prinzip des First In - Last Out erfolgt. Die Reihenfolge der Nietelemente 3 in der Nietkassette 2 kann vorzugsweise nicht innerhalb der Nietkassette geändert werden.

Wie aus der vorstehenden Beschreibung und der Fig. 1 hervorgeht, sind die Nietbereitstellungseinheit 4, ggf. die Prüfeinheiten 11, 12 und die Nietkassettenaufnahme 5 mit einer darin ggf. aufgenommenen Nietkassette 2 miteinander verkettet, also insbesondere räumlich beieinander angeordnet. Die Nietelemente 3 werden vorzugsweise durch einen, insbesondere feststehend montierten, Roboter 6 von der Nietbereitstellungseinheit 4 ggf. über die Prüfeinheiten 11, 12 der Nietkassette 2 zugeführt. Für den Transport können jedoch ggf. auch mehrere Roboter 6 vorgesehen sein.

Fehlerhafte Nietelemente 3 werden vorzugsweise einem Ausschussbehälter 13a zugeführt. Dies kann beispielsweise roboterbasiert, insbesondere mittels des Roboters 6, erfolgen, oder aber, sollte die fehlerhaften Nietelemente 3 im Abgreifbereich 4c erfolgen, können gute Nietelemente 3 vom Roboter 6 den Nietkassetten 2 zugeführt werden und, insbesondere wenn nur noch fehlerhafte Nietelemente 3 im Abgreifbereich verblieben sind, die im Abgreifbereich 4c verbliebenen Nietelemente 3 von der Nietbereitstellungseinheit 4, beispielsweise mittels Rüttelbewegungen, einem Ausschussbehälter 13b zugeführt werden.

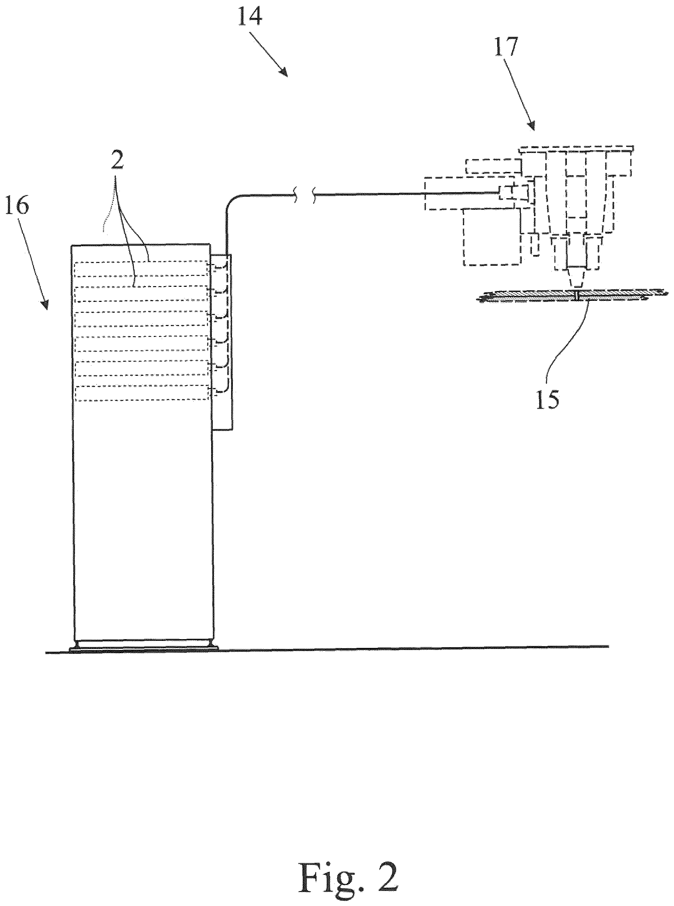

In der Fig. 2 wird die vorschlagsgemäße Fertigungseinrichtung 14 zur Herstellung eines Strukturbauteils 15 schematisch gezeigt. Nachdem eine Nietkassette 2 mit dem zuvor beschriebenen Verfahren befüllt wurde, kann diese Nietkassette 2 in eine Nietspeichereinheit 16 eingesetzt werden. Zum Bohren und Nieten weist die Fertigungseinrichtung 14 ein Bohr-Niet-Werkzeug 17 auf.

Auf der Basis der mit der Nietkassette 2 verknüpften Informationen kann die Fertigungseinrichtung 14 den Bohrprozess und/oder den Nietprozess an das zusetzende Nietelement 3 anpassen. Zusätzlich oder alternativ kann für ein bereits gebohrtes und ggf. vermessenes Loch ein passendes Nietelement 3 aus der Nietspeichereinheit 16 angefordert werden.

Bevorzugt wird somit auf der Basis der vor der Zuführung der Nietelemente 3 zur Nietkassette 2 erfassten, vorbestimmten, für den Bohrprozess und/oder den Nietprozess relevanten Eigenschaften der Nietelemente 3, die Bohrung und/oder die Nietung vorgenommen, und/oder, es wird auf der Basis der vor der Zuführung der Nietelemente 3 zur Nietkassette 2 erfassten, vorbestimmten, für den Bohrprozess und/oder den Nietprozess relevanten Eigenschaften der Nietelemente 3, für eine Bohrung 15a ein passendes Nietelement 3 aus der Nietspeichereinheit 16 angefordert und eine Nietverbindung hergestellt.

Von besonderer Bedeutung ist dabei insbesondere die Vermessung der Köpfe 3c der Nietelemente 3 und die Anpassung der Bohrung 15a, insbesondere der Senkung 15b an den Kopf 3c des Nietelements 3 bzw. die Auswahl eines Nietelements 3 mit einem passenden Kopf 3c für eine Bohrung 15a, insbesondere die Senkung 15b einer Bohrung 15a. Gemäß einer besonders bevorzugten Ausgestaltung des Verfahrens erfasst die Nietbeladestation 1 beispielsweise als vorbestimmte, für den Bohrprozess und/oder den Nietprozess relevante Eigenschaften der Nietelemente 3 den Nietkopfdurchmesser und/oder die Nietkopflänge vor der Zuführung zur Nietkassette und dass die Fertigungseinrichtung auf der Basis des Nietkopfdurchmessers und/oder der Nietkopflänge die Bohrung bestimmt und vornimmt, insbesondere die Senktiefe für die Bohrung bestimmt und vornimmt.

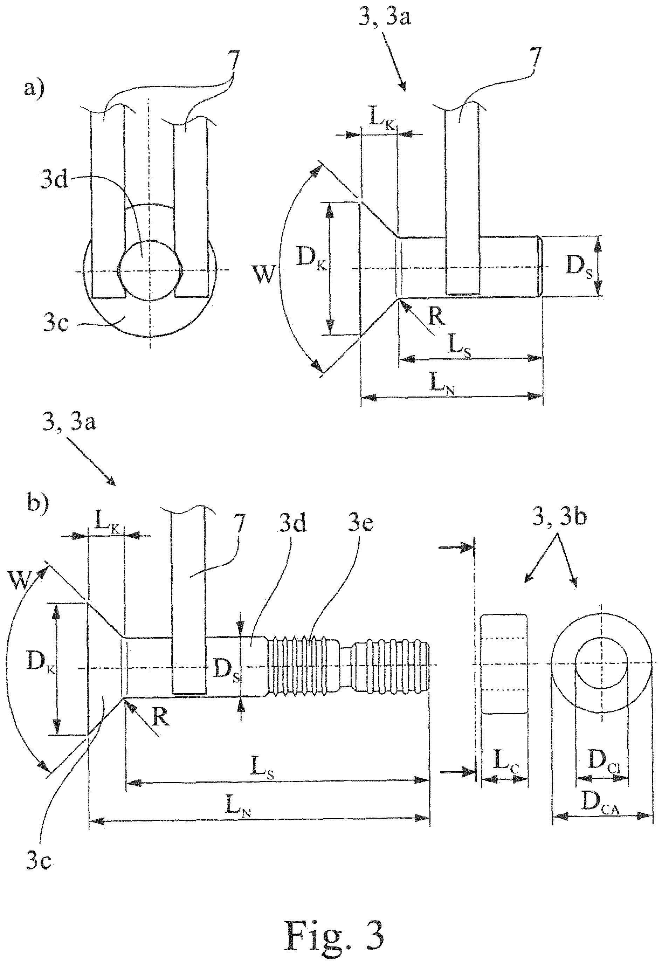

In der Fig. 3 sind schließlich beispielhaft für die Nietelemente 3 in a) ein Vollniet mit Senkkopf, in b) ein Passniet mit Senkkopf und ein zum Passniet korrespondierender Nietkollar 3b gezeigt. Darüber hinaus können auch viele weitere Nietelemente mit der Nietbeladestation auf dieselbe Art und Weise Nietkassetten zugeführt werden. Dies können insbesondere auch Schraubnieten und/oder Blindniete sein.

Für die in der Fig. 3 gezeigten Nietelemente 3 sind beispielhaft für den Bohrprozess und/oder den Nietprozess mögliche relevante Eigenschaften gezeigt, wobei eine Auswahl aus diesen jeweils von den Anforderungen an die zu erzeugende Nietverbindung abhängen können. Die relevanten Eigenschaften sind hier und vorzugsweise die Nietläng L_{N} und/oder die Schaftlänge Ls und/oder die Kopflänge L_{K} und/oder der Kopfdurchmesser D_{K} und/oder der Schaftdurchmesser Ds bemaßt. Ferner sind der Senkkopfwinkel W sowie der Übergangsradius R als mögliche für den Bohrprozess und/oder den Nietprozess relevante Eigenschaften eingezeichnet. Darüber hinaus ist eine Nietstruktur, nämlich die Schließrillen 3e des Passniets in Fig. 3b), gezeigt.

Für den Nietkollar 3b sind hier als für den Nietprozess relevante Eigenschaften die Nietkollarlänge L_{C} sowie der Nietkollarinnendurchmesser D_{CI} und der Nietkollaraußendurchmesser D_{CA} gezeigt.

## Patentansprüche

1. Verfahren zum Befüllen einer Nietkassette (2) mit Nietelementen (3) mittels einer Nietbeladestation (1) mit einer Nietbereitstellungseinheit (4) zur Bereitstellung der Nietelemente (3) und mit einer Nietkassettenaufnahme (5) zur Aufnahme einer Nietkassette (2),
wobei die Nietelemente (3) aus der Nietbereitstellungseinheit (4) einer in der Nietkassettenaufnahme (5) aufgenommenen Nietkassette (2) zugeführt und darin ausgerichtet aufgenommen werden,
wobei zumindest ein Teil des Transports von der Nietbereitstellungseinheit (4) zur Nietkassette (2) roboterbasiert erfolgt,
wobei die Nietbeladestation eine Steuerung (8) zur Steuerung der Nietbeladestation (1) und eine Sensoranordnung (9) aufweist, wobei die Steuerung (8) mittels der Sensoranordnung (9) den Typ eines von der Nietbereitstellungseinheit (4) bereitgestellten Nietelements (3) erfasst und die Steuerung (8) kontrolliert, ob es sich bei dem erfassten Typ um einen in eine Nietkassette (2) zu füllenden Solltyp handelt.

2. Verfahren nach Anspruch 1, **dadurch gekennzeichnet, dass** Nieten unterschiedlicher Gattung, insbesondere unterschiedlichen Typs, und/oder unterschiedlicher Nennlänge und/oder unterschiedlichen Nenndurchmessers durch die Nietbeladestation (1) ohne Veränderung der mechanischen Konfiguration der Nietbeladestation (1) einer Nietkassette (2) bzw. verschiedenen Nietkassetten (2) zugeführt werden.

3. Verfahren nach einem der vorhergehenden Ansprüche, **dadurch gekennzeichnet, dass** Nietkollare unterschiedlicher Gattung, insbesondere unterschiedlichen Typs, und/oder unterschiedlicher Nennlänge und/oder unterschiedlichen Nenndurchmessers durch die Nietbeladestation (1) ohne Veränderung der mechanischen Konfiguration der Nietbeladestation (1) einer Nietkassette (2) bzw. verschiedenen Nietkassetten (2) zugeführt werden.

4. Verfahren nach einem der vorhergehenden Ansprüche, **dadurch gekennzeichnet, dass** Nieten und Nietkollare durch die Nietbeladestation (1) ohne Veränderung der mechanischen Konfiguration der Nietbeladestation (1) einer Nietkassette (2) bzw. verschiedenen Nietkassetten (2) zugeführt werden.

5. Verfahren nach einem der vorhergehenden Ansprüche, **dadurch gekennzeichnet, dass** die Nietelemente (3) in der Nietbereitstellungseinheit (4) vereinzelt und vorzugsweise einem Abgreifbereich zugeführt werden, vorzugsweise, dass die Nietelemente im Abgreifbereich roboterbasiert abgegriffen werden.

6. Verfahren nach einem der vorhergehenden Ansprüche, **dadurch gekennzeichnet, dass** die Steuerung (8) mittels eines optischen Sensors (10) der Sensoranordnung (9) die Position und/oder Ausrichtung der Nietelemente (3) in der Nietbereitstellungseinheit (4), insbesondere im Abgreifbereich (4c), erfasst, vorzugsweise, dass die Steuerung (8) basierend auf der Position und/oder Ausrichtung der Nietelemente (3) den Roboter (6) zur Aufnahme eines Nietelements (3) ansteuert.

7. Verfahren nach einem der vorhergehenden Ansprüche, **dadurch gekennzeichnet, dass** die Steuerung die Nietelemente mittels eines optischen Sensors (10) der Sensoranordnung erfasst, und/oder, dass die Steuerung (8) mittels des/ eines optischen Sensors (10) der Sensoranordnung (9) den Typ des von der Nietbereitstellungseinheit (4) bereitgestellten Nietelements (3) erfasst, und/oder, dass bei der Erfassung des Typs des Nietelements dieser im Abgreifbereich (4c) liegt.

8. Verfahren nach einem der vorhergehenden Ansprüche, **dadurch gekennzeichnet, dass** vorbestimmte, für den Bohrprozess und/oder den Nietprozess relevante Eigenschaften der Nietelemente (3) vor der Zuführung zur Nietkassette (2) erfasst werden.

9. Verfahren nach einem der vorhergehenden Ansprüche, **dadurch gekennzeichnet, dass** die Steuerung (8) mittels der Sensoranordnung (9), insbesondere mittels eines optischen Sensors (10) der Sensoranordnung (9), die Nietelemente (3) auf eine Beschädigung prüft.

10. Verfahren nach einem der vorhergehenden Ansprüche, **dadurch gekennzeichnet, dass** eine für den Bohrprozess und/oder den Nietprozess relevante Eigenschaft die Nietlänge und/oder der Schaftdurchmesser und/oder die Schaftlänge ist.

11. Verfahren nach einem der vorhergehenden Ansprüche, **dadurch gekennzeichnet, dass** die Nietbeladestation (1) eine Prüfeinheit (11) zur Erfassung von vorbestimmten, für den Bohrprozess und/oder den Nietprozess relevanten Eigenschaften der Nietelemente (3) aufweist, und dass die Blickachse A eines auf die Nietbereitstellungseinheit (4) gerichteten optischen Sensors (10) der Sensoranordnung (9) und die Blickachse eines optischen Sensors (11a) der Prüfeinheit (11) nicht parallel zueinander verlaufen, vorzugsweise, dass die Blickachse A des auf die Nietbereitstellungseinheit (4) gerichteten optischen Sensors (10) der Sensoranordnung (9) und die Blickachse B des optischen Sensors (11a) der Prüfeinheit (11) im Wesentlichen senkrecht zueinander verlaufen.

12. Verfahren nach einem der vorhergehenden Ansprüche, **dadurch gekennzeichnet, dass** die Nietkassettenaufnahme (5) und/oder Nietkassette (2) eine Ablage aufweist, in die die Nietelemente (3) abgelegt werden.

13. Verfahren nach einem der vorhergehenden Ansprüche, **dadurch gekennzeichnet, dass** die Nietelemente (3) mittels einer Druckdifferenz in die Nietkassette (2) gefördert werden, insbesondere mittels eines Unterdrucks oder mittels Druckluft.

14. Verfahren zur Herstellung eines Strukturbauteils (15), insbesondere eines Flugzeugstrukturbauteils,
**dadurch gekennzeichnet,**
**dass** eine Nietkassette (2) gemäß dem Verfahren nach einem der vorhergehenden Ansprüche befüllt wird und dass die Nietkassette (2) danach in eine Nietspeichereinheit (16) einer Fertigungseinrichtung (14) zur Herstellung eines Strukturbauteils (15) eingesetzt wird und die Fertigungseinrichtung (14) in ein Strukturbauteil (15) ein Loch zur Erzeugung einer Nietverbindung bohrt und ein Nietelement (3) aus der Nietkassette (2) in das Loch einsetzt und nietet.

15. Nietbeladestation mit einer Nietbereitstellungseinheit (4) zur Bereitstellung der Nietelemente (3), mit einer Nietkassettenaufnahme (5) zur Aufnahme einer Nietkassette (2), mit einem Roboter (6), mit einer Steuerung (8) zur Steuerung der Nietbeladestation (1) und mit einer Sensoranordnung (9), wobei die Nietbeladestation zur Durchführung eines Verfahrens nach einem der vorhergehenden Ansprüche eingerichtet und ausgebildet ist.

## Claims

1. Method for filling a rivet cassette (2) with rivet elements (3) by means of a rivet loading station (1) having a rivet providing unit (4) for providing the rivet elements (3) and having a rivet cassette receptacle (5) for receiving a rivet cassette (2),
wherein the rivet elements (3) from the rivet providing unit (4) are fed to a rivet cassette (2) received in the rivet cassette receptacle (5) and received therein in an aligned manner,
wherein at least some of the transport from the rivet providing unit (4) to the rivet cassette (2) is effected in a robot-based manner,
wherein the rivet loading station comprises a control means (8) for controlling the rivet loading station (1) and comprises a sensor arrangement (9), wherein the control means (8) uses the sensor arrangement (9) to detect the type of a rivet element (3) provided by the rivet providing unit (4) and the control means (8) checks whether the type detected is a specific type to be filled into a rivet cassette (2).

2. Method according to Claim 1, **characterized in that** rivets of different kinds, in particular different types, and/or different nominal lengths and/or different nominal diameters are fed to a rivet cassette (2) or various rivet cassettes (2) by the rivet loading station (1) without changing the mechanical configuration of the rivet loading station (1).

3. Method according to either one of the preceding claims, **characterized in that** rivet collars of different kinds, in particular different types, and/or different nominal lengths and/or different nominal diameters are fed to a rivet cassette (2) or various rivet cassettes (2) by the rivet loading station (1) without changing the mechanical configuration of the rivet loading station (1).

4. Method according to one of the preceding claims, **characterized in that** rivets and rivet collars are fed to a rivet cassette (2) or various rivet cassettes (2) by the rivet loading station (1) without changing the mechanical configuration of the rivet loading station (1).

5. Method according to one of the preceding claims, **characterized in that** the rivet elements (3) are isolated in the rivet providing unit (4) and preferably fed to a gripping region, preferably **in that** the rivet elements are gripped in a robot-based manner in the gripping region.

6. Method according to one of the preceding claims, **characterized in that** the control means (8) uses an optical sensor (10) of the sensor arrangement (9) to detect the position and/or alignment of the rivet elements (3) in the rivet providing unit (4), in particular in the gripping region (4c), preferably **in that** the control means (8) actuates the robot (6) on the basis of the position and/or alignment of the rivet elements (3) for the purpose of receiving a rivet element (3) .

7. Method according to one of the preceding claims, **characterized in that** the control means uses an optical sensor (10) of the sensor arrangement to detect the rivet elements, and/or **in that** the control means (8) uses the/an optical sensor (10) of the sensor arrangement (9) to detect the type of the rivet element (3) provided by the rivet providing unit (4) and/or, upon detecting the type of the rivet element, lays it in the gripping region (4c) .

8. Method according to one of the preceding claims, **characterized in that** predetermined properties, that are relevant for the boring process and/or the riveting process, of the rivet elements (3) are detected before the feeding to the rivet cassette (2).

9. Method according to one of the preceding claims, **characterized in that** the control means (8) uses the sensor arrangement (9), in particular an optical sensor (10) of the sensor arrangement (9), to check the rivet elements (3) for damage.

10. Method according to one of the preceding claims, **characterized in that** a property relevant for the boring process and/or the riveting process is the rivet length and/or the shank diameter and/or the shank length.

11. Method according to one of the preceding claims, **characterized in that** the rivet loading station (1) comprises a checking unit (11) for detecting predetermined properties, that are relevant for the boring process and/or the riveting process, of the rivet elements (3), and **in that** the viewing axis A of an optical sensor (10) of the sensor arrangement (9) that is directed at the rivet providing unit (4) and the viewing axis B of an optical sensor (11a) of the checking unit (11) do not run parallel to one another, preferably **in that** the viewing axis A of the optical sensor (10) of the sensor arrangement (9) that is directed at the rivet providing unit (4) and the viewing axis B of the optical sensor (11a) of the checking unit (11) run substantially perpendicular to one another.

12. Method according to one of the preceding claims, **characterized in that** the rivet cassette receptacle (5) and/or rivet cassette (2) has a deposit area, into which the rivet elements (3) are deposited.

13. Method according to one of the preceding claims, **characterized in that** the rivet elements (3) are conveyed into the rivet cassette (2) by means of a pressure difference, in particular by means of a negative pressure or by means of compressed air.

14. Method for producing a structural component (15), in particular an aircraft structural component,
**characterized**
**in that** a rivet cassette (2) is filled by the method according to one of the preceding claims, and in that the rivet cassette (2) is then inserted into a rivet storing unit (16) of a manufacturing device (14) for producing a structural component (15) and the manufacturing device (14) bores a hole into a structural component (15) for the purpose of creating a riveted connection and inserts and rivets a rivet element (3) from the rivet cassette (2) into the hole.

15. Rivet loading station having a rivet providing unit (4) for providing the rivet elements (3), having a rivet cassette receptacle (5) for receiving a rivet cassette (2), having a robot (6), having a control means (8) for controlling the rivet loading station (1), and having a sensor arrangement (9), wherein the rivet loading station is configured and designed to carry out a method according to one of the preceding claims.

## Revendications

1. Procédé de remplissage d'une cassette à rivets (2) avec des éléments formant rivets (3) au moyen d'une station de chargement de rivets (1) comprenant une unité de fourniture de rivets (4) pour la fourniture des éléments formant rivets (3) et comprenant un logement de cassette à rivets (5) pour le logement d'une cassette à rivets (2),
les éléments formant rivets (3) étant amenés de l'unité de fourniture de rivets (4) à une cassette à rivets (2) logée dans le logement de cassette à rivets (5) et y étant logés de manière orientée,
au moins une partie du transport de l'unité de fourniture de rivets (4) vers la cassette à rivets (2) étant effectuée de manière robotisée,
la station de chargement de rivets présentant une commande (8) pour commander la station de chargement de rivets (1) et un agencement de capteur (9), la commande (8) détectant, au moyen de l'agencement de capteur (9), le type d'un élément formant rivet (3) fourni par l'unité de fourniture de rivets (4) et la commande (8) contrôlant si le type détecté consiste en un type de consigne avec lequel une cassette à rivets (2) doit être remplie.

2. Procédé selon la revendication 1, **caractérisé en ce que** des rivets de genres différents, notamment de types différents, et/ou de longueurs nominales différentes et/ou de diamètres nominaux différents sont amenés par la station de chargement de rivets (1) à une cassette à rivets (2) ou à différentes cassettes à rivets (2) sans modification de la configuration mécanique de la station de chargement de rivets (1).

3. Procédé selon l'une quelconque des revendications précédentes, **caractérisé en ce que** des cols de rivets de genres différents, notamment de types différents, et/ou de longueurs nominales différentes et/ou de diamètres nominaux différents sont amenés par la station de chargement de rivets (1) à une cassette à rivets (2) ou à différentes cassettes à rivets (2) sans modification de la configuration mécanique de la station de chargement de rivets (1).

4. Procédé selon l'une quelconque des revendications précédentes, **caractérisé en ce que** des rivets et des cols de rivets sont amenés par la station de chargement de rivets (1) à une cassette à rivets (2) ou à différentes cassettes à rivets (2) sans modification de la configuration mécanique de la station de chargement de rivets (1).

5. Procédé selon l'une quelconque des revendications précédentes, **caractérisé en ce que** les éléments formant rivets (3) sont séparés dans l'unité de fourniture de rivets (4) et de préférence amenés à une zone de prélèvement, de préférence **en ce que** les éléments formant rivets sont prélevés de manière robotisée dans la zone de prélèvement.

6. Procédé selon l'une quelconque des revendications précédentes, **caractérisé en ce que** la commande (8) détecte au moyen d'un capteur optique (10) de l'agencement de capteur (9) la position et/ou l'orientation des éléments formant rivets (3) dans l'unité de fourniture de rivets (4), notamment dans la zone de prélèvement (4c), de préférence **en ce que** la commande (8) commande le robot (6) pour la réception d'un élément formant rivet (3) sur la base de la position et/ou de l'orientation des éléments formant rivets (3).

7. Procédé selon l'une quelconque des revendications précédentes, **caractérisé en ce que** la commande détecte les éléments formant rivets au moyen d'un capteur optique (10) de l'agencement de capteur, et/ou **en ce que** la commande (8) détecte au moyen du/d'un capteur optique (10) de l'agencement de capteur (9) le type de l'élément formant rivet (3) fourni par l'unité de fourniture de rivets (4), et/ou **en ce que**, lors de la détection du type de l'élément formant rivet, celui-ci se trouve dans la zone de prélèvement (4c).

8. Procédé selon l'une quelconque des revendications précédentes, **caractérisé en ce que** des propriétés prédéterminées des éléments formant rivets (3), pertinentes pour le processus de perçage et/ou le processus de rivetage, sont détectées avant l'amenée à la cassette à rivets (2).

9. Procédé selon l'une quelconque des revendications précédentes, **caractérisé en ce que** la commande (8) vérifie les éléments formant rivets (3) en termes d'endommagement au moyen de l'agencement de capteur (9), notamment au moyen d'un capteur optique (10) de l'agencement de capteur (9).

10. Procédé selon l'une quelconque des revendications précédentes, **caractérisé en ce qu'**une propriété pertinente pour le processus de perçage et/ou le processus de rivetage est la longueur du rivet et/ou le diamètre de la tige et/ou la longueur de la tige.

11. Procédé selon l'une quelconque des revendications précédentes, **caractérisé en ce que** la station de chargement de rivets (1) présente une unité de vérification (11) pour la détection de propriétés prédéterminées des éléments formant rivets (3), pertinentes pour le processus de perçage et/ou le processus de rivetage, et **en ce que** l'axe d'observation A d'un capteur optique (10) de l'agencement de capteur (9) dirigé vers l'unité de fourniture de rivets (4) et l'axe d'observation B d'un capteur optique (11a) de l'unité de vérification (11) ne sont pas parallèles entre eux, de préférence **en ce que** l'axe d'observation A du capteur optique (10) de l'agencement de capteur (9) dirigé vers l'unité de fourniture de rivets (4) et l'axe d'observation B du capteur optique (11a) de l'unité de vérification (11) sont essentiellement perpendiculaires entre eux.

12. Procédé selon l'une quelconque des revendications précédentes, **caractérisé en ce que** le logement de cassette à rivets (5) et/ou la cassette à rivets (2) présente un rangement dans lequel les éléments formant rivets (3) sont rangés.

13. Procédé selon l'une quelconque des revendications précédentes, **caractérisé en ce que** les éléments formant rivets (3) sont acheminés dans la cassette à rivets (2) au moyen d'une différence de pression, notamment au moyen d'une sous-pression ou au moyen d'air comprimé.

14. Procédé de fabrication d'un composant structural (15), notamment d'un composant structural d'aéronef,
**caractérisé en ce que**
une cassette à rivets (2) est remplie par le procédé selon l'une quelconque des revendications précédentes et **en ce que** la cassette à rivets (2) est ensuite insérée dans une unité de stockage de rivets (16) d'un appareil de fabrication (14) pour la fabrication d'un composant structural (15) et l'appareil de fabrication (14) perce un trou dans un composant structural (15) pour produire une liaison par rivet et insère un élément formant rivet (3) à partir de la cassette à rivets (2) dans le trou et le rive.

15. Station de chargement de rivets comprenant une unité de fourniture de rivets (4) pour la fourniture des éléments formant rivets (3), comprenant un logement de cassette à rivets (5) pour le logement d'une cassette à rivets (2), comprenant un robot (6), comprenant une commande (8) pour la commande de la station de chargement de rivets (1) et comprenant un agencement de capteur (9), la station de chargement de rivets étant aménagée et configurée pour la mise en œuvre d'un procédé selon l'une quelconque des revendications précédentes.
